# EUROPÄISCHE PATENTANMELDUNG

(11) **EP 1 184 625 A2**
(43) Veröffentlichungstag der Anmeldung: **06.03.2002**
(21) Anmeldenummer: 01120478.1
(22) Anmeldetag: 28.08.2001
(51) Int. Cl.: F24D 3/16

(54) **Wärmetauscherdecke**

(30) Priorität: 01.09.2000 DE 20015085 U
(71) Anmelder: ABB PATENT GmbH, 68526 Ladenburg (DE)
(72) Erfinder: Ferl, Klaus, Dipl.-Ing., 72160 Horb (DE)
(74) Vertreter: Miller, Toivo

(57) **Zusammenfassung**

Die Erfindung bezieht sich auf eine Wärmetauscherdecke mit einer an einer Raumdekke abgehängten Befestigungskonstruktion für Deckenverkleidungsplatten, die eine Tragekonstruktion für Wärmeleitprofile (14, 15, 16) aufweisen, wobei das Wärmeleitprofil (14, 15, 16) ein bandartiges Basiselement (58), mit an dessen Längsrichtung symmetrisch verlaufenden, auf der Oberseite angeformten, nach oben weisenden Verbindungssteg (60) zur Verbindung mit der Tragekonstruktion und einer mittig dazwischen am Basiselement (58) angeformten Einrichtung (50) zur formschlüssigen Aufnahme eines Wärmetauscherrohre (57) aufweist, wobei an der hiervon abgewandten Unterseite des Basiselements (58) wenigstens eine Ausnehmung (62) eingeformt ist, die als Kammer zur Aufnahme von Magneten vorgesehen ist, und wobei auf einer Deckenverkleidungsplatte wenigstens zwei Wärmeleitprofile (14, 15, 16) in Längsrichtung nebeneinander angeordnet und die Wärmetauscherrohre (57) zweier benachbarter Wärmeleitprofile (14, 15, 16) an ihren Enden mit einer Verbindungsleitung (59) verbunden sind. Die Verbindungsleitung (59) ist auf den einander zugewandten Längsseiten aus dem jeweiligen Bereich der Wärmeleitprofile (14, 15, 16) längsseitig herausgeführt.

## Beschreibung

Die Erfindung betrifft eine Wärmetauscherdecke mit einer an einer Raumdecke abgehängten Befestigungskonstruktion für Deckenverkleidungsplatten, die eine Tragekonstruktion für Wärmeleitprofile aufweisen, wobei das Wärmeleitprofil ein bandartiges Basiselement, mit an dessen Längsrichtung symmetrisch verlaufenden, auf der Oberseite angeformten, nach oben weisenden Verbindungsstegen zur Verbindung mit der Tragekonstruktion und einer mittig dazwischen am Basiselement angeformten Einrichtung zur formschlüssigen Aufnahme eines Wärmetauscherrohrs aufweist, wobei an der hiervon abgewandten Unterseite des Basiselements wenigstens eine Ausnehmung eingeformt ist, die als Kammer zur Aufnahme von Magneten vorgesehen ist, und wobei auf einer Deckenverkleidungsplatte wenigstens zwei Wärmeleitprofile in Längsrichtung nebeneinander angeordnet und die Wärmetauscherrohre zweier benachbarter Wärmeleitprofile an ihren Enden mit einer Verbindungsleitung verbunden sind.

Aus der G 94 17 231 U1 ist ein Wärmeleitprofil bekannt, in dem ein Wärmetauscherrohr geführt ist. Die Wärmeleitprofile sind mittels Magnetkraft mit den betreffenden Deckenverkleidungsplatten verbunden und vorzugsweise parallel zur längeren Seite der Deckenverkleidungsplatten nebeneinander auf dieser angeordnet. Um die einzelnen Wärmetauscherrohre auf einer Deckenverkleidungsplatte miteinander zu verbinden sind an den jeweiligen Ende eines Wärmeleitprofils Rohrverbindungsbögen angesetzt, die demgemäß jeweils über die Stirnseiten der Wärmeleitprofile überstehen. Die Rohrverbindungsbögen dürfen jedoch nicht über die Kontur der betreffenden Deckenverkleidungsplatte überstehen, da diese sonst nicht mehr in die Tragekonstruktion der Decke einhängbar ist. Derart verbunden, ist ein mäanderförmiges Wärmetauscherrohr für eine Deckenverkleidungsplatte geformt.

Ausgehend von diesem Stand der Technik ist es Aufgabe der Erfindung ein Wärmetauscherdecke anzugeben, die wärmetechnisch verbesserte Eigenschaften aufweist und deren Deckenverkleidungsplatten eine verbesserte Steifigkeit haben.

Diese Aufgabe wird erfindungsgemäß durch eine Wärmetauscherdecke mit den in Anspruch 1 genannten Merkmalen gelöst.

Bei einer erfindungsgemäßen Wärmetauscherdecke ist demnach die Verbindungsleitung auf den einander zugewandten Längsseiten aus dem jeweiligen Bereich der Wärmeleitprofile längsseitig herausgeführt.

Eine über die Stirnseite des Wärmeleitprofils überstehende Verbindungsleitung ist vorteilhafterweise vermieden. Diese Anordnung ist besonders vorteilhaft, weil vergleichsweise längere Wärmeleitprofile und somit größeren Wärmetauschflächen, das sind die Berührflächen zwischen den Wärmeleitprofilen sowie den Deckenverkleidungsplatten, auf einer Deckenverkleidungsplatte aufbringbar sind. Die größeren Wärmetauscherflächen können entweder dazu eingesetzt werden, die übertragene Wärmemenge zu erhöhen, oder, bei einer bestimmten zu übertragenden Wärmemenge, die Anzahl der notwendigen Wärmeleitprofile zu verringern.

Zudem ist als maximale Länge des Wärmeleitprofils eine Länge von nahezu die Länge einer Deckenverkleidungsplatte wählbar. In dem Fall ist günstigerweise ein Maximum an Wärmetauschfläche je Wärmeleitprofil, bezogen auf eine bestimmte Länge einer Deckenplatte, erreicht. Zudem wird eine vorteilhaft erhöhte Steifigkeit der Dekkenverkleidungsplatte erreicht.

Noch größere Wärmetauschflächen auf einer Deckenverkleidungsplatte und damit auch auf der Wärmetauscherdecke insgesamt, sind erreicht, wenn die zueinander weisenden Längsseiten der Basiselemente zweier benachbarter Wärmeleitprofile dicht an dicht liegen, insbesondere sich gerade berühren. Um einen Wärmeausdehnungs- beziehungsweise Bewegungseffekt bei Durchhang einer Deckenverkleidungsplatte bei der Anordnung der Wärmeleitprofile zu berücksichtigen, kann es auch nützlich sein, einen kleinen Abstand zwischen den Längsseiten der Wärmeleitprofile zuzulassen. Dies ist ebenfalls konform mit dem Erfindungsgedanken.

Eine vorteilige Ausgestaltung der Verbindungsleitung ist ein entsprechend langes Rohrstück, wobei an den Rohrenden jeweils Verbindungsstücke angebracht und zur Verbindung mit den Wärmetauscherrohren vorgesehen sind. Eine Verbindungsleitung kann vorteilhafterweise aber auch so ausgestaltet sein, daß die Verbindungsleitung ein flexibler Schlauch ist. Dann ist insbesondere die Verlegung beziehungsweise die Montage vorteilhaft vereinfacht.

Als Verbindungsstücke werden häufig Bogenstücke eingesetzt, die am Ende der Verbindungsleitung mit einem möglichst kleinen Krümmungsradius, vorzugsweise 1,5D, gebogen sind. Auf diese Weise ist günstigerweise erreicht, daß die Einrichtungen beziehungsweise die Wärmetauscherrohre mit einer maximalen Länge ausgeführt werden können.

Eine besonderes vorteilhafte Ausgestaltung der Wärmetauscherdecke ist es, wenn das Wärmetauscherrohr in die Einrichtung einrastbar ist. Dies gewährleistet eine besonders einfache und schnelle Montage. Zudem wird eine weitgehenden Vormontage von Wärmetascherrohren mit den entsprechenden Verbindungsstücken ermöglicht.

Des weiteren kann bei der Wärmetauscherdecke wenigstens eine Halterung zur Fixierung der Verbindungsleitung auf der Oberseite des Basiselements vorgesehen sein. Die Montage ist vorteilhaft vereinfacht und zudem sicherer, weil die geplante Lage der Verbindungsleitung für den Monteur sichtbar vorgegeben ist.

Die Wärmeleitprofile auf den Deckenverkleidungsplatten der Wärmetauscherdecke können eine vorteilhafte maximale Länge annehmen, wenn die Verbindungsleitung vollständig innerhalb der Längenausdehnung des Wärmeleitprofils verlegt ist. Diese Anordnung stellt sicher, daß die Länge der Wärmeleitprofile nahezu die Länge der Deckenverkleidungsplatte erreichen kann. Gleichzeitig ist die Verbindungsleitung bei der Montage der Deckenverkleidungsplatte in die Befestigungskonstruktion mechanisch weitgehend durch die Wärmeleitprofile geschützt.

Eine besonders nützliche Ausgestaltung der Wärmetauscherdecke ist es, wenn die Wärmeleitprofile in wenigstens einem der Verbindungsstege wenigstens eine erste Ausnehmung haben, durch die wenigstens eine Verbindungsleitung zum Wärmetauscherrohr in der Einrichtung von einer zu dem betreffenden Verbindungssteg weisenden Längsseite des Wärmeleitprofils sowie im wesentlichen parallel zur Ebene des Basiselements zuführbar ist. Dies ermöglicht eine besonders einfache und montagefreundliche Zuführung beziehungsweise Verlegung der Verbindungsleitung zum betreffenden Wärmetauscherrohr.

Des weiteren ist in der Einrichtung wenigstens eine zweite Ausnehmung vorhanden, durch welche die Verbindungsleitung dem Wärmetauscherrohr in der Einrichtung zuführbar ist. Auch diese Maßnahme ermöglicht eine besonders einfache und montagefreundliche Zuführung beziehungsweise Verlegung der Verbindungsleitung zum betreffenden Wärmetauscherrohr.

Insgesamt wird die Wärmetauscherdecke also wärmetechnisch verbessert sowie eine verbesserte Versteifung der einzelnen Deckenverkleidungsplatten erreicht.

Weitere vorteilhafte Ausgestaltungen der Erfindung sind den abhängigen Ansprüchen zu entnehmen.

Die Erfindung, eine beispielhafte Ausgestaltungen der Erfindung sowie die besonderen Vorteile der Erfindung sollen anhand der folgenden Figur gezeigt, beschrieben und näher erläutert werden.

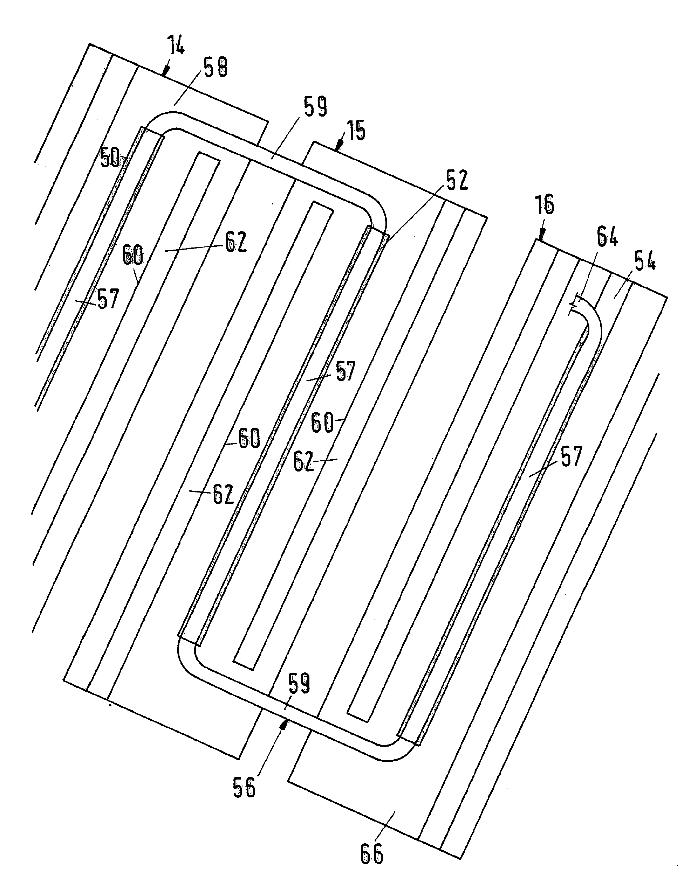

Es zeigen:
einzige Fig. eine Draufsicht auf eine Anordnung von Wärmeleitprofilen.

Die einzige Fig. zeigt eine Draufsicht auf eine Anordnung von einem ersten 14, einem zweiten 15 sowie einem dritten Wärmeleitprofil 16, die mit ihren Längsseiten parallel zueinander liegen, und wie diese beispielsweise zur Kühlung einer Deckenverkleidungsplatte einer Kühldecke eingesetzt werden können. Eine mäanderförmige Wärmeträgerleitung 56 weist Wärmetauscherrohre 57 und Verbindungsrohre 59 auf, wobei die Wärmetauscherrohre 57 in dem entsprechend zugeordneten ersten, zweiten und dritten Halteelement 50, 52, 54 der jeweiligen Wärmeleitprofile 14, 15, 16 gehalten sind, wobei die Wärmetauscherrohre 57 jeweils mit einem 90° Bogen der Verbindungsrohre 59 verbunden sind, und wobei jeweils zwei sich gegenüberliegende 90° Bögen von zwei benachbarten Wärmeprofilen, nämlich dem ersten 14 und dem zweiten 15 sowie dem zweiten 15 und dem dritten 16, mit einem wiederum geraden Rohrstück der Verbindungsrohre 59 verbunden sind. Die 90° Bögen sind so gewählt und angeordnet, daß ein Überstehen über die Stirnseiten, das heißt der schalen Seiten der Wärmeleitprofile 14, 15, 16, vermieden ist. Zudem sind die 90° Bögen in diesem Beispiel als 1,5D Bögen ausgeführt, daß heißt der Krümmungsradius des Rohrbogens beträgt das 1,5fache des Rohrdurchmessers.

Die vorgeschlagene Anordnung ist realisierbar, wenn, wie am Beispiel des ersten Wärmeleitprofils 14 gezeigt werden soll, bestimmte Merkmale am betreffenden Wärmeleitprofil verwirklicht sind. Die Wärmeträgerleitung 56 ist im betreffenden Bereich in einem 90° Bogen in Richtung des benachbarten zweiten Wärmeleitprofils 15 geführt. Das erste Halteelement 50 endet mit einem entsprechenden Abstand zu der Stirnseite des Wärmeleitprofils 14, so daß der 90° Bogen vollständig im von einem ersten Basiselement 58 überdeckten Bereich des ersten Wärmeleitprofils 14 liegt. Die Wärmeträgerleitung 56 ist nun parallel, also in der Ebene dieser Ansicht, zum ersten Basiselement 58 geführt. Zur Vermeidung einer Kollision des Verbindungsrohrs 59 mit einem ersten Verbindungssteg 60 beziehungsweise mit einer ersten Ausnehmung 62, enden diese mit einem entsprechenden Abstand zu der Stirnseite des ersten Wärmeleitprofils 14. Dabei ist es für die Erfindung von untergeordneter Bedeutung, ob das betreffende Wärmeleitprofil mit dem verkürzten Halteelement 50, dem verkürzten Verbindungssteg 60 sowie der verkürzten Ausnehmung 62 so hergestellt wird oder zunächst ungekürzt hergestellt wird und dann durch entsprechende Bearbeitung mit den vorgesehenen Ausnehmungen versehen wird.

Das erste 15 sowie das dritte Wärmeleitprofil 16 sind entsprechend dem Mäander der Wärmeträgerleitung 56 in ähnlicher Weise gestaltet. Beim dritten Wärmeleitprofil 16 ist am Ende der Wärmeträgerleitung 56 und damit am Ende des betreffenden Wärmetauscherrohrs 57, ein Anschlußpunkt 64 gezeigt, der sich nach einem 90° Bogen, der parallel zu einem dritten Basiselement 66 angeordnet ist, befindet und dafür vorgesehen ist, an einem Kühlmittelkreislauf angeschlossen zu werden. Das dritte Halteelement 54 hat an der betreffenden Stelle, an welcher der soeben beschriebene 90° Boden angeordnet ist eine nützlich gestaltete Ausnehmung.

Demgemäß kann die Länge der Wärmeleitprofile 14, 15, 16 so gewählt werden, daß die bis zum Rand einer Deckenverkleidungsplatte reichen. Die Magnetstreifen sind entsprechend länger. Eine demgemäß bessere Verbindung mit der Deckenverkleidungsplatte ist erreicht.

Um die Verminderung beim der Durchbiegung einer Deckenverkleidungsplatte, dem sogenannten Plattendurchhang, zu zeigen, soll folgendes Beispiel dienen. Bei einer Abmessung von 950mm Breite sowie 1800mm Länge einer Deckenverkleidungsplatte mit einer Standard-Dicke von 0,7mm war bisher ein Plattendurchhang von ca.8mm typisch. Ein Plattendurchhang in dieser Größenordnung wird jedoch vom Auge eines Betrachters wahr genommen und als störend betrachtet. Ein Plattendurchhang von 3mm wird üblicherweise vom Betrachter akzeptiert. Mit dicht an dicht angeordneten Wärmeleitprofilen, deren Länge maximal, also eine Länge entsprechend der den Deckenverkleidungsplatten gewählt wurde, ist für diesen Fall ein Plattendurchhang von nur ca. 2mm erzielbar.

## Patentansprüche

1. Wärmetauscherdecke mit einer an einer Raumdecke abgehängten Befestigungskonstruktion für Deckenverkleidungsplatten, die eine Tragekonstruktion für Wärmeleitprofile (14, 15, 16) aufweisen, wobei das Wärmeleitprofil (14, 15, 16) ein bandartiges Basiselement (58), mit an dessen Längsrichtung symmetrisch verlaufenden, auf der Oberseite angeformten, nach oben weisenden Verbindungsstegen (60) zur Verbindung mit der Tragekonstruktion und einer mittig dazwischen am Basiselement (58) angeformten Einrichtung (50) zur formschlüssigen Aufnahme eines Wärmetauscherrohrs (57) aufweist, wobei an der hiervon abgewandten Unterseite des Basiselements (58) wenigstens eine Ausnehmung (62) eingeformt ist, die als Kammer zur Aufnahme von Magneten vorgesehen ist, und wobei auf einer Deckenverkleidungsplatte wenigstens zwei Wärmeleitprofile (14, 15, 16) in Längsrichtung nebeneinander angeordnet und die Wärmetauscherrohre (57) zweier benachbarter Wärmeleitprofile (14, 15, 16) an ihren Enden mit einer Verbindungsleitung (59) verbunden sind, **dadurch gekennzeichnet, daß** die Verbindungsleitung (59) auf den einander zugewandten Längsseiten aus dem jeweiligen Bereich der Wärmeleitprofile (14, 15, 16) längsseitig herausgeführt ist.

2. Wärmetauscherdecke nach Anspruch 1, **dadurch gekennzeichnet, daß** als maximale Länge des Wärmeleitprofils (14, 15, 16) nahezu die Länge einer Deckenverkleidungsplatte wählbar ist.

3. Wärmetauscherdecke nach Anspruch 1 oder 2, **dadurch gekennzeichnet, daß** sich die zueinander weisenden Längsseiten der Basiselemente (58) zweier benachbarter Wärmeleitprofile (14, 15, 16) berühren.

4. Wärmetauscherdecke nach einem der Ansprüche 1 bis 3, **dadurch gekennzeichnet, daß** die Verbindungsleitung (59) ein flexibler Schlauch ist.

5. Wärmetauscherdecke nach einem der Ansprüche 1 bis 4, **dadurch gekennzeichnet, daß** Bogenstücke am Ende der Verbindungsleitung (59) mit einem möglichst kleinen Krümmungsradius, vorzugsweise 1,5D, gebogen sind.

6. Wärmetauscherdecke nach einem der Ansprüche 1 bis 5, **dadurch gekennzeichnet, daß** das Wärmetauscherrohr (57) in die Einrichtung (50) einrastbar ist.

7. Wärmetauscherdecke nach einem der Ansprüche 1 bis 6, **dadurch gekennzeichnet, daß** wenigstens eine Halterung zur Fixierung der Verbindungsleitung (59) auf der Oberseite des Basiselements vorgesehen ist.

8. Wärmetauscherdecke nach einem der Ansprüche 1 bis 7, **dadurch gekennzeichnet, daß** die Verbindungsleitung (59) innerhalb der Längenausdehnung des Wärmeleitprofils (14, 15, 16) verlegt ist.

9. Wärmetauscherdecke nach einem der Ansprüche 1 bis 8, **dadurch gekennzeichnet, daß** in wenigstens einem der Verbindungsstege (62) wenigstens eine erste Ausnehmung vorgesehen ist, durch die wenigstens eine Verbindungsleitung (59) zum Wärmetauscherrohr in der Einrichtung (50) von einer zu dem betreffenden Verbindungssteg (62) weisenden Längsseite des Wärmeleitprofils (14, 15, 16) sowie im wesentlichen parallel zur Ebene des Basiselements (58) zuführbar ist.

10. Wärmetauscherdecke nach einem der Ansprüche 1 bis 9, **dadurch gekennzeichnet, daß** in der Einrichtung (50) wenigstens eine zweite Ausnehmung vorhanden ist, durch welche die Verbindungsleitung (59) dem Wärmetauscherrohr (57) in der Einrichtung (58) zuführbar ist.
